# EUROPÄISCHE PATENTSCHRIFT

(11) **EP 0 888 432 B1**
(45) Veröffentlichungstag und Bekanntmachung des Hinweises auf die Patenterteilung: **24.05.2000**
(21) Anmeldenummer: 97914216.3
(22) Anmeldetag: 10.03.1997
(51) Int. Cl.: C11D 3/18, C11D 3/00, C11D 11/02, B01D 19/04

(54) **TEILCHENFÖRMIGES SCHAUMREGULIERUNGSMITTEL AUF PARAFFIN-BASIS**
PARTICULATE FOAM-REGULATING AGENT MADE FROM PARAFFIN
AGENT PARTICULAIRE REGULATEUR DE MOUSSE A BASE DE PARAFFINE

(30) Priorität: 19.03.1996 DE 19610718; 21.05.1996 DE 19620249
(43) Veröffentlichungstag der Anmeldung: 07.01.1999
(73) Patentinhaber: Henkel Kommanditgesellschaft auf Aktien, 40589 Düsseldorf-Holthausen (DE)
(72) Erfinder: LIPHARD, Maria, D-45279 Essen (DE); KRAUS, Ingrid, D-40229 Düsseldorf (DE); SEITER, Wolfgang, D-41469 Neuss (DE); SCHRECK, Berthold, D-40476 Düsseldorf (DE); JACOBS, Jochen, D-42349 Wuppertal (DE); WALDHÖR, Siegfried, A-2340 Mödling 10 (AT)
(86) Internationale Anmeldenummer: EP9701216
(87) Internationale Veröffentlichungsnummer: WO9734983

(56) Entgegenhaltungen:
- EP-A- 0 309 931
- WO-A-93/17772

## Beschreibung

Die Erfindung betrifft ein schütt- und rieselfähiges Schaumregulierungsmittel, insbesondere zur Verwendung bei der Herstellung von teilchenförmigen Wasch- und Reinigungsmitteln, enthaltend anorganisches und/oder organisches Trägermaterial und daran adsorbiertes Entschäumergemisch, welches aus Carbonsäure-Bisamiden und bestimmtem Paraffinwachs besteht.

Die Verwendung von Bisamiden als Entschäumer für Waschmittel ist aus der deutschen Offenlegungsschrift DE 20 43 087 bekannt. Die dort genannten Rezepturen besitzen jedoch keine gleichmäßige Entschäumerwirkung über einen großen Temperaturbereich und weisen insbesondere bei niedrigen Waschtemperaturen Schwächen auf. In der europäischen Patentschrift EP 087 233 wird ein Verfahren zur Herstellung eines schwachschäumenden Waschmittels beschrieben, bei dem Gemische aus einer öligen beziehungsweise wachsartigen Substanz und Bisamiden auf ein Trägerpulver, insbesondere ein sprühgetrocknetes tensidhaltiges Waschmittel aufgetragen werden. Die ölige beziehungsweise wachsartige Substanz kann zum Beispiel aus Vaseline mit einem Schmelzpunkt von 20 °C bis 120 °C bestehen. In den Beispielen wird für diesen Zweck Mineralöl eingesetzt. Offensichtlich dient diese Komponente in erster Linie als Trägerbeziehungsweise Dispergiermittel für das Bisamid. Bei einem Einsatz von 2 Gewichtsprozent Entschäumergemisch, bezogen auf das Mittel, werden zwar nach dem Ross-Miles-Test befriedigende Werte erhalten, jedoch erscheinen diese Einsatzmengen für die Praxis viel zu hoch. Außerdem besteht bei dieser Art der Konfektionierung, nämlich dem Aufsprühen des Entschäumergemischs auf das sprühgetrocknete, tensidhaltige Waschmittel die Gefahr, daß sich das Herstellungsverfahren nachteilig auf die Lagerbeständigkeit der sich auschließlich an der Oberfläche des Schaumregulierungsmittels befindenden Schaumregulierungskomponente auswirkt mit dem Ergebnis, daß deren Aktivität mit zunehmender Lagerzeit abnimmt. Um ihre Wirkung zu steigern und gleichzeitig die erforderliche Anwendungskonzentration herabzusetzen, werden diesen Entschäumern häufig weitere bekannte Schauminhibitoren zugesetzt, insbesondere Polysiloxane oder Polysiloxan-Kieselsäure-Gemische. Polysiloxane sind bei bekannt guter Entschäumerwirkung jedoch vergleichsweise aufwendig in der Herstellung, was sie als Rohstoffe in der Regel teurer als vergleichbare Wirksubstanzen macht, und besitzen den Nachteil, daß sie oft als in ihrer biologischen Abbaubarkeit im Abwasser nicht völlig befriedigend empfunden werden. Weitere Bisamide enthaltende Mittel sind aus den europäischen Patentschriften EP 075 437 und EP 094 250 bekannt. Dort beschriebene Mittel enthalten jedoch Silikone. Aus der deutschen Offenlegungsschrift DE 28 57 155 sind Waschmittel mit einem Schaumregulierungsmittel bekannt, das hydrophobes Siliziumdioxid und ein Gemisch aus festen und flüssigen Kohlenwasserstoffen, gegebenenfalls im Gemisch mit Fettsäureestern, enthält. In der europäischen Patentanmeldung EP 309 931 sind Schaumregulierungsmittel beschrieben worden, welche auf ein relativ aufwendiges Gemisch aus Paraffinwachs und mikrokristallinem Paraffinwachs angewiesen sind. Aus der internationalen Patentanmeldung WO 93/17772 sind Carbonsäure-bisamid-enthaltende Schaumregulierungsmittel auf Paraffin-Basis bekannt, bei deren Paraffinwachsenkomponente der Flüssiganteil so niedrig wie möglich liegt und vorzugsweise ganz fehlt. Dort besitzen bevorzugte Paraffinwachsgemische bei 30 °C einen Flüssiganteil von unter 10 Gew.-%, und bei 40 °C einen Flüssiganteil von unter 30 Gew.-%. Derartige Mittel weisen allerdings bei der in neuerer Zeit immer mehr Bedeutung gewinnenden maschinellen Wäsche im Niedrigtemperaturbereich in manchen Fällen eine als unzureichend empfundene Entschäumerleistung auf.

Die Aufgabe bestand in der Bereitstellung eines silikonfreien, rieselfähigen Schaumregulierungsmittels, das in Wasch- und Reinigungsmitteln eingesetzt über einen breiten Temperaturbereich bis zu Kochwaschtemperaturen wirksam ist, aber insbesondere im Kaltwaschbereich und bei mittleren Waschtemperaturen eine störende Schaumentwicklung noch wirksamer unterdrückt als die Mittel des Standes der Technik. Weiterhin soll das Schaumregulierungsmittel im Gemisch mit üblichen Waschmittelbestandteilen lager- und wirkungsstabil bleiben und keine nachteiligen Auswirkungen auf das Behandlungsgut und die Umwelt ausüben.

Es wurde nun gefunden, daß die bestehende Aufgabe durch Schaumregulierungsmittel gelöst werden kann, welche Carbonsäure-Bisamid und Paraffinwachs mit einem speziellen Schmelzbereich enthalten.

Gegenstand der Erfindung ist ein körniges, rieselfähiges Schaumregulierungsmittel, enthaltend (I) körniges, wasserlösliches oder wasserdispergierbares, anorganisches und/oder organisches Trägermaterial und (II) daran adsorbiertes homogenes Entschäumergemisch, das (a) 70 Gew.-% bis 95 Gew.-% eines Paraffinwachses beziehungsweise Paraffinwachsgemisches sowie (b) 5 Gew.-% bis 30 Gew.-% eines von C₂₋₇-Diaminen und gesättigten C₁₂₋₂₂-Carbonsäuren abgeleiteten Bisamids enthält, wobei das Mittel dadurch gekennzeichnet ist, daß das Paraffinwachs (Komponente IIa) bei Raumtemperatur fest ist und bei einer Temperatur von 40 °C zu mindestens 35 Gew.-%, insbesondere zu mindestens 45 Gew.-%, und weniger als 100 Gew.-% in flüssiger Form vorliegt.

Im erfindungsgemäßen Schaumregulierungsmittel sind vorzugsweise 80 Gew.-% bis 95 Gew.-%, insbesondere 82 Gew.-% bis 92 Gew.-% Trägermaterial (I) und 5 Gew.-% bis 20 Gew.-%, insbesondere 8 Gew.-% bis 18 Gew.-% Entschäumergemisch (II) enthalten.

Vorzugsweise enthält das Entschäumergemisch (II) 80 Gew.-% bis 95 Gew.-%, insbesondere 82 Gew.-% bis 90 Gew.-% Paraffinwachs (a) und 5 Gew.-% bis 20 Gew.-%, insbesondere 10 Gew.-% bis 18 Gew.-% Bisamid (b).

Das vorzugsweise phosphatfreie Trägermaterial (I) weist eine körnige Struktur auf und besteht aus wasserlöslichen oder wasserdispergierbaren, tensidfreien Verbindungen, in erster Linie aus anorganischen und/oder organischen Salzen, die für den Einsatz in Wasch- und Reinigungsmitteln geeignet sind. Zu den wasserlöslichen anorganischen Trägermaterialien gehören insbesondere Alkalicarbonat, Alkaliborat, Alkalialumosilikat und/oder Alkalisulfat, gegebenenfalls mit Zusätzen von Alkalisilikat, wobei letzteres zu guten Kornstabilitäten der erfindungsgemäßen Mittel beitragen kann. Bei dem Alkalisilikat handelt es sich vorzugsweise um eine Verbindung mit einem Molverhältnis Alkalioxid zu SiO₂ von 1:1,5 bis 1:3,5. Die Verwendung derartiger Silikate resultiert in besonders guten Korneigenschaften, insbesondere hoher Abriebsstabilität und dennoch hoher Auflösungsgeschwindigkeit in Wasser. Zu den zusätzlich verwendbaren anorganischen Materialien gehören insbesondere Zeolithe und Schichtsilikate, beispielsweise Bentonit. Zu den im Trägermaterial für die erfindungsgemäßen Schaumregulierungsmittel brauchbaren Zeolithe gehören insbesondere Zeolith A, Zeolith P und Zeolith X.

Als organische Trägermaterialien kommen zum Beispiel die Acetate, Tartrate, Succinate, Citrate, Carboxymethylsuccinate sowie die Alkalisalze von Aminopolycarbonsäuren, wie EDTA, Hydroxyalkanphosphonate und Aminoalkanpolyphosphonate in Frage, wie 1-Hydroxyethan-1,1-diphosphonat, Ethylendiaminotetramethylenphosphonat und Diethylentriaminpentamethylenphosphonat. Brauchbar sind ferner wasserlösliche Salze von polymeren beziehungsweise copolymeren Carbonsäuren, beispielsweise Mischpolymerisate aus Acrylsäure und Maleinsäure sowie die zum Beispiel aus der internationalen Patentanmeldung WO 93\08251 bekannten Polycarbonsäuren, die man durch Oxidation von Polysacchariden erhält. Bevorzugtes Alkalimetall in den genannten Alkalisalzen ist in allen Fällen Natrium. Auch nicht in Salzform vorliegende organische Substanzen, wie beispielsweise Stärke oder Stärkehydrolysate, können als Trägermaterialkomponenten zum Einsatz kommen. Gemische aus anorganischen und organischen Salzen können vielfach mit Vorteil verwendet werden.

Das Trägermaterial kann darüberhinaus filmbildende Polymere, beispielsweise Polyethylenglykole, Polyvinalalkohole, Polyvinylpyrrolidone, Polyacrylate und Cellulosederivate, enthalten. Zu den brauchbaren Cellulosederivaten gehören Celluloseether, insbesondere Alkalicarboxymethylcellulose, Methylcellulose, Ethylcellulose, Hydroxyethylcellulose und sogenannte Cellulosemischether, wie zum Beispiel Methylhydroxyethylcellulose und Methylhydroxypropylcellulose, sowie deren Mischungen. Vorzugsweise werden Mischungen aus Natrium-Carboxymethylcellulose und Methylcellulose eingesetzt, wobei die Carboxymethylcellulose üblicherweise einen Substitutionsgrad von 0,5 bis 0,8 Carboxymethylgruppen pro Anhydroglukoseeinheit und die Methylcellulose einen Substitutionsgrad von 1,2 bis 2 Methylgruppen pro Anhydroglukoseeinheit aufweist. Die Gemische enthalten vorzugsweise Alkalicarboxymethylcellulose und nichtionischen Celluloseether in Gewichtsverhältnissen von 80:20 bis 40:60, insbesondere von 75:25 bis 50:50. Derartige Celluloseethergemische können in fester Form oder als wäßrige Lösungen verwendet werden, die in üblicher Weise vorgequollen sein können. Derartige filmbildende Polymere sind in dem Trägermaterial vorzugsweise nicht über 5 Gew.-%, insbesondere von 0,5 Gew.-% bis 2 Gew.-%, bezogen auf gesamtes Trägermaterial, enthalten.

Die Trägermaterialkomponente des erfindungsgemäßen Schaumregulierungsmittel enthält in einer bevorzugten Ausführungsform bis zu 99 Gew.-%, insbesondere 60 Gew.-% bis 95 Gew.-% Alkalicarbonat und/oder Alkalisulfat, insbesondere Natriumcarbonat und/oder Natriumsulfat, bis zu 35 Gew.-%, insbesondere von 0,5 Gew.-% bis 30 Gew.-% Alkalisilikat, insbesondere Natriumsilikat und bis zu 5 Gew.-%, insbesondere 0,5 Gew.-% bis 2 Gew.-% wasserlösliches beziehungsweise in Wasser quellfähiges Polymer, insbesondere Celluloseether.

Das im Entschäumergemisch (II) enthaltene Paraffinwachs (Komponente a) stellt im allgemeinen ein komplexes Stoffgemisch ohne scharfen Schmelzpunkt dar. Zur Charakterisierung bestimmt man üblicherweise seinen Schmelzbereich durch Differential-Thermo-Analyse (DTA), wie in "The Analyst" 87 (1962), 420, beschrieben, und/oder seinen Erstarrungspunkt. Darunter versteht man die Temperatur, bei der das Wachs durch langsames Abkühlen aus dem flüssigen in den festen Zustand übergeht. Paraffine mit weniger als 17 C-Atomen sind erfindungsgemäß nicht brauchbar, ihr Anteil im Paraffinwachsgemisch sollte daher so gering wie möglich sein und liegt vorzugsweise unterhalb der mit üblichen analytischen Methoden, zum Beispiel Gaschromatographie, signifikant meßbaren Grenze. Vorzugsweise werden Wachse verwendet, die im Bereich von 20 °C bis 70 °C erstarren. Dabei ist zu beachten, daß auch bei Raumtemperatur fest erscheinende Paraffinwachsgemische unterschiedliche Anteile an flüssigem Paraffin enthalten können. Bei den erfindungsgemäß brauchbaren Paraffinwachsen liegt der Flüssiganteil bei 40 °C möglichst hoch, ohne bei dieser Temperatur schon 100 % zu betragen. Besonders bevorzugte Paraffinwachsgemische weisen bei 40 °C einen Flüssiganteil von mindestens 50 Gew.-%, insbesondere von 55 Gew.-% bis 80 Gew.-%, und bei 60 °C einen Flüssiganteil von mindestens 90 Gew.-% auf. Dies hat zur Folge, daß die Paraffine bei Temperaturen bis hinunter zu mindestens 70 °C, vorzugsweise bis hinunter zu mindestens 60 °C fließfähig und pumpbar sind. Außerdem ist darauf zu achten, daß die Paraffine möglichst keine flüchtigen Anteile enthalten. Bevorzugte Paraffinwachse enthalten weniger als 1 Gew.-%, insbesondere weniger als 0,5 Gew.-% bei 110 °C und Normaldruck verdampfbare Anteile. Erfindungsgemäß brauchbare Paraffinwachse können beispielsweise unter den Handelsbezeichnungen Lunaflex® der Firma Fuller sowie Deawax® der DEA Mineralöl AG bezogen werden.

Komponente (b) des Entschäumergemischs (II) besteht aus Bisamiden, die sich von gesättigten Fettsäuren mit 12 bis 22, vorzugsweise 14 bis 18 C-Atomen sowie von Alkylendiaminen mit 2 bis 7 C-Atomen ableiten. Geeignete Fettsäuren sind Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Geeignete Diamine sind beispielsweise Ethylendiamin 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bis-myristoyl-ethylendiamin, Bis-palmitoyl-ethylendiamin, Bis-stearoyl-ethylendiamin und deren Gemische sowie die entsprechenden Derivate des Hexamethylendiamins.

Die Bisamide liegen vorzugsweise, wie in der europäischen Patentanmeldung EP 309 931 beschrieben, in feinverteilter Form vor und weisen insbesondere eine mittlere Korngröße von weniger als 50 µm auf. Vorzugsweise liegt die maximale Korngröße der Partikel unter 20 µm, wobei mindestens 50 %, insbesondere mindestens 75 % der Partikel kleiner als 10 µm sind. Diese Angaben hinsichtlich der Partikelgröße beziehen sich auf die bekannte Bestimmungsmethode mit dem "Coulter Counter". Zusätzlich zu dem Entschäumergemisch (II) kann ein erfindungsgemäßes Schaumregulierungsmittel weitere Entschäumerwirkstoffe, beispielsweise Silikonöle und deren Abmischungen mit hydrophobierter Kieselsäure, enthalten, vorzugsweise ist es jedoch frei von derartigen zusätzlichen Entschäumerwirkstoffen.

Die Herstellung des Entschäumergemisches (II) kann in der Weise erfolgen, daß man in eine Schmelze des Bestandteils (a) das feinteilige Bisamid (Komponente b) einträgt und durch intensives Vermischen darin homogenisiert. Die Schmelze sollte dazu eine Temperatur von mindestens 90 °C und höchstens 200 °C aufweisen. Vorzugsweise beträgt die Temperatur 100 ° bis 150 °C. Wesentlich für eine gute Wirksamkeit des Entschäumers ist das Vorliegen einer stabilen Dispersion der Bisamid-Teilchen in der Paraffinmatrix, was durch eine der genannten Definition entsprechende Teilchengröße bewirkt werden kann. Zwecks Erzielung dieses Dispersionszustandes kann man ein Bisamid einsetzen und dispergieren, das von vornherein die entsprechende Teilchengröße aufweist, oder man verwendet ein grobteiligeres Ausgangsmaterial und unterwirft die Schmelze einer intensiven Rührbehandlung oder einer Mahlbehandlung mittels Kolloidmühlen, Zahnmühlen oder Kugelmühlen, bis die erwünschte Teilchengröße erreicht ist.

Auch ein vollständiges Aufschmelzen der Bisamide in der Paraffinschmelze und anschließendes schnelles Abkühlen auf Temperaturen unterhalb des Erstarrungspunktes der Bisamide unter gleichzeitigem Homogenisieren der Schmelze kann zu einer entsprechend feinen Kornverteilung der Bisamide führen.

Erfindungsgemäße Schaumregulierungsmittel sind vorzugsweise frei von emulgierend beziehungsweise dispergierend wirkenden Tensiden. Unter Tensiden sind oberflächenaktive Verbindungen mit hydrophobem Molekülteil und hydrophilen anionischen, ampholytischen, zwitterionischen, kationischen und nichtionischen Gruppen zu verstehen, die in wäßriger Lösung oder Dispersion eine reinigende beziehungsweise emulgierende Wirkung entfalten. Der hydrophobe Molekülteil besteht im allgemeinen aus einem Kohlenwasserstoffrest beziehungsweise einem substituierten Kohlenwasserstoffrest oder einem in Wasser schwer löslichen Polyglykoletherrest, zum Beispiel einem Polypropylenglykol- bzw. Polybutylenglykol-Etherrest. Verbindungen mit nichtpolarem Molekülaufbau, insbesondere die genannten filmbildenden Polymere, die unter bestimmten Voraussetzungen in Wasser ebenfalls eine Dispergierwirkung entfalten können, fallen nicht unter die Definition "Tenside" und können in den erfindungsgemäßen Mitteln enthalten sein.

Die Herstellung eines erfindungsgemäßen Schaumregulierungsmittels kann durch Aufbringen des geschmolzenen Entschäumergemisches (II) auf das körnige Trägermaterial (I) erfolgen, beispielsweise durch sukzessives Zumischen, insbesondere als Spray, zu dem Trägerkorn. Das Trägerkorn, welches in üblicher Weise durch Sprühtrocknen einer wäßrigen Aufschlämmung der Trägersalze erzeugt werden kann, wird dabei durch Mischorgane oder durch Fluidisierung in Bewegung gehalten, um eine gleichmäßige Beladung des Trägermaterials zu gewährleisten. Die dafür verwendeten Sprühmischer können kontinuierlich oder diskontinuierlich betrieben werden.

Eine Ausführungsform zur Herstellung besteht darin, das körnige Trägermaterial in kontinuierlichem Strom durch die ebenfalls kontinuierlich erzeugte Sprühnebelzone des zumindest teilweise geschmolzenen Entschäumergemischs zu schleudern, wobei Verweilzeiten des Trägermaterials in der heißen Sprühnebelzone von meist weniger als 1 Sekunde erreicht werden können. Weiterhin ist es möglich, unmittelbar im Anschluß daran die Partikel des Schaumregulierungsmittels mit Hilfe eines Gasstroms abzukühlen, so daß die thermische Belastungen des Materials außerordentlich gering gehalten werden kann.

Das vorstehend geschilderte Verfahren greift auf einen Verfahrenstyp zurück, wie er beispielsweise aus der europäischen Patentanmeldung EP 048 312 bekannt ist. Als Vorrichtung zur Durchführung des Verfahrens wird in dieser Druckschrift eine radförmig ausgebildete Mischvorrichtung beschrieben, in der zwei individuell ausgebildete und anzutreibende radförmige Scheiben übereinander gelagert sind. Der einen Scheibe wird das Feststoffpulver zugeführt, die darunterliegende Schreibe wird mit der flüssigen Komponente beaufschlagt. Beide Scheiben laufen mit hohen Umdrehungsgeschwindigkeiten, die im Bereich von einigen 100 bis einigen 1000 Umdrehungen pro Minute liegen können. Die jeweils beaufschlagten Scheibenflächen und insbesondere der Rand der die Flüssigkeit tragenden Scheibe sind so ausgestaltet, daß einerseits die Sprühnebelzone vom Rand des mit hoher Umdrehungsgeschwindigkeit laufenden Rades abgeschleudert und kontinuierlich nachgebildet wird, zum anderen wird das dem anderen radförmigen Element kontinuierlich zugeführte körnige Material durch diese Sprühnebelzone der Flüssigphase hindurchgeschleudert. Auf Grund der hohen Arbeitsgeschwindigkeit kommt es zu der sehr kurzen Berührung der zwei Materialphasen miteinander und damit zu einem zeitlich nur sehr kurzen Kontakt der Feststoffteilchen mit der warmen beziehungsweise heißen Sprühnebelphase. Mit der in der EP 048 312 geschilderten Vorrichtung ist das Verfahren besonders gut durchführbar, doch es ist nicht auf Vorrichtungen dieser Art beschränkt. Wesentlich ist die Einstellung einer relativ kurzen Kontaktzeit, die dadurch erreicht wird, daß das feste Gut durch eine kontinuierlich erzeugte Sprühnebelzone hindurchgeschleudert wird, wobei das feste Material gegebenenfalls vor und/oder hinter der Sprühnebelzone gekühlt werden kann.

Die Herstellung des Schaumregulierungsmittels erfolgt in einer weiteren erfindungsgemäßen Ausgestaltung derart, daß man das Trägermaterial (I) in Wasser löst beziehungsweise aufschlämmt, das Entschäumergemisch (II) als ganzes oder in Form seiner getrennten Einzelkomponenten darin dispergiert und diesen Slurry anschließend sprühtrocknet. Der Dispersion wird vorzugsweise ein wasserlöslicher, nichttensidischer Dispersionsstabilisator in Form eines in Wasser quellfähigen Polymeren zugesetzt, da die Komponenten des Entschäumergemisches im wäßrigen Slurry im allgemeinen nicht ausreichend löslich sind. Beispiele hierfür sind die genannten Celluloseether, Homo- und Copolymere von ungesättigten Carbonsäuren, wie Acrylsäure, Maleinsäure und copolymerisierbaren Vinylverbindungen, wie Vinylether, Acrylamid und Ethylen. Der Zusatz an derartigen als Dispersionsstabilisatoren wirkenden Verbindungen in der wäßrigen Aufschlämmung beträgt vorzugsweise nicht über 5 Gew.-%, insbesondere 1 Gew.-% bis 3 Gew.-%, bezogen auf das Mittel. Der Wassergehalt des Slurries kann je nach Art beziehungsweise Löslichkeit des Trägersalzes 30 Gew.-% bis 60 Gew.-% betragen. Das Sprühtrocknen der Dispersion kann in im Prinzip bekannter Weise in dafür vorgesehenen Anlagen, sogenannten Sprühtürmen, mittels heißer, in Gleichstrom oder Gegenstrom geführter Trocknungsgase erfolgen. Dabei ist die Trocknung durch im Gleichstrom mit dem Sprühgut geführte Trocknungsgase bevorzugt, da so der auf die potentielle Heißluftflüchtigkeit einiger Bestandteile des Entschäumergemisches zurückzuführende Aktivitätsverlust auf ein Minimum gesenkt werden kann. Ein besonders bevorzugtes Herstellverfahren mittels Sprühtrocknung bedient sich den aus der deutschen Patentanmeldung DE 40 30 688, der europäischen Patentschrift EP 625 922 oder der internationalen Patentanmeldung WO 93/15815 bekannten Verfahren. Dabei bedient man sich überhitzten Wasserdampfes als Trocknungsgas, das normalerweise im Kreislauf geführt werden kann und außerhalb der Trocknungszone erhitzt wird.

Ein erfindungsgemäßes Schaumregulierungsmittel besteht vorzugsweise aus Partikeln mit einer mittleren Korngröße nicht über 2 mm, insbesondere von 0,1 mm bis 1,6 mm. Vorzugsweise enthält es nicht mehr als 20 Gew.-%, insbesondere nicht mehr als 5 Gew.-% Partikel mit einer Korngröße über 1,6 mm, und nicht mehr als 20 Gew.-%, insbesondere nicht mehr als 5 Gew.-% Partikel mit einer Korngröße unter 0,1 mm. Das erfindungsgemäße Schaumregulierungsmittel weist vorzugsweise ein Schüttgewicht im Bereich von 500 Gramm pro Liter bis 1000 Gramm pro Liter auf. Vorzugsweise wird es zur Herstellung von teilchenförmigen Wasch- oder Reinigungsmitteln verwendet, wobei als weiterer Vorteil der erfindungsgemäßen Schaumregulierungsmittel ihre geringe Einsatzmenge bei guter Entschäumerleistung zu bemerken ist. So gelingt es, die Entschäumerleistung üblicher Entschäumer in der Hochtemperaturwäsche bei etwa 90 °C mit gewichtsgleichen Mengen, bezogen auf Aktivsubstanz, der erfindungsgemäßen Schaumregulierungsmittel auf Paraffin-Basis zu erreichen. Im Niedrigtemperaturbereich beziehungsweise während der anfänglichen Aufheizphase der Mittel- und Hochtemperaturwäsche sind die erfindungsgemäßen Schaumregulatoren den bisher üblichen Entschäumern in der Regel überlegen.

### Beispiele

### Beispiel 1 : Herstellung von Schaumregulierungsmitteln

Es wurden aus den in Tabelle 1 angegebenen Rohstoffen wäßrige Aufschlämmungen erzeugt, die gemäß dem Verfahren der europäischen Patentschrift EP 625 922 mit überhitztem Wasserdampf sprühgetrocknet wurden. Dabei wurde das in Tabelle 1 durch seine Zusammensetzung charakterisierte rieselfähige Pulverprodukt **B1** (erfindungsgemäß) und zum Vergleich das ein erfindungsgemäß nicht brauchbares höherschmelzendes Paraffin enthaltende Produkt **V1** erhalten.

**Tabelle 1:**

| Zusammensetzung [Gew.-%] | | |
|---|---|---|
| | **B1** | **V1** |
| Paraffin^{a)} | 8,8 | - |
| Paraffin^{b)} | - | 8,8 |
| Bisamid | 1,2 | 1,2 |
| Natriumcarbonat | 3 | 3 |
| Natriumsulfat | 58,7 | 58,7 |
| Natriumsilikat | 21,4 | 21,4 |
| Celluloseether | 2,1 | 2,1 |
| Wasser | auf 100 | |

| | | |
|---|---|---|
| a): Erstarrungspunkt nach DIN ISO 2207 45 °C, Flüssiganteil bei 40 °C ca. 66 Gew.-%, bei 60 °C ca. 96 % | | |
| b): Flüssiganteil bei 40 °C ca. 9 Gew.-%, bei 60 °C ca. 66 % | | |

### Beispiel 2

Durch einfaches Vermischen von jeweils 1,5 Gew.-% an Schaumregulatorgranulat **B1** beziehungsweise **V1** mit einem üblichen Universalwaschmittelbasispulver, welches 21 Gew.-% Zeolith Na-A, 20 Gew.-% Natriumsulfat, 3 Gew.-% Natriumsilikat, 10 Gew.-% Natriumcarbonat, 3,5 Gew.-% polymeres Polycarboxylat (Sokalan® CP5), 8 Gew.-% Natriumalkylbenzolsulfonat, 2 Gew.-% Niotensid, 1,5 Gew.-% Seife, 22 Gew-% Natriumperborat und 2 Gew.-% TAED, Rest auf 100 Gew.-% Wasser enthielt, wurden Waschmittel hergestellt. Durch Waschversuche (Trommelwaschmaschine Miele® W 918, 3,5 kg saubere Wäsche, Wasserhärte 3 °d, Dosierung 130 g Waschmittel) wurde belegt, daß die erfindungsgemäßen Schaumregulatoren insbesondere bei niedrigen Temperaturen wirksamer sind als der zum Vergleich getestete Schaumregulator des Standes der Technik (**V1**). Man erhielt die in der nachfolgenden Tabelle 2 angegebenen Schaumnoten (Skala von 0 bis 6; 0 = kein Schaum; 3 = Schauglas der Waschmaschine zur Hälfte mit Schaum gefüllt; 5 = Schauglas der Waschmaschine vollständig mit Schaum gefüllt; 6 = Flottenverlust durch Überschäumen; abgelesen wurde beim Waschen im 40 °C-Programm nach der angegebenen Waschdauer und beim 90°C-Programm im angegebenen Temperaturbereich). Nach Lagerung (8 Wochen in kaschierten Kartons bei 30 °C und 80 % relativer Luftfeuchte) des Waschmittels mit dem erfindungsgemäßen Schaumregulatorgranulat **B1** ergaben sich keine Verschlechterungen der Entschäumerleistung.

**Tabelle 2:**

| Schaumnoten der Schaumregulatoren im Waschmittel | | | | | | |
|---|---|---|---|---|---|---|
| | 40 °C | | | 90 °C | | |
| Schaumregulator | < 20 min | < 40 min | > 40 min | < 55 °C | < 75 °C | > 75 °C |
| **B1** | 0-1,5 | 0-1,5 | 0-1,5 | 0-1,5 | 0-1,5 | 2,0-3,5 |
| **V1** | >4 | >4 | >4 | >4 | >4 | >4 |

## Patentansprüche

1. Körniges, rieselfähiges Schaumregulierungsmittel, enthaltend (I) körniges, wasserlösliches oder wasserdispergierbares, anorganisches und/oder organisches Trägermaterial und (II) ein adsorbiertes homogenes Entschäumergemisch, das (a) 70 Gew.-% bis 95 Gew.-% eines Paraffinwachses beziehungsweise Paraffinwachsgemisches sowie (b) 5 Gew.-% bis 30 Gew.-% eines von C₂₋₇-Diaminen und gesättigten C₁₂₋₂₂-Carbonsäuren abgeleiteten Bisamids enthält, dadurch gekennzeichnet, daß das Paraffinwachs (Komponente IIa) bei Raumtemperatur fest ist und bei einer Temperatur von 40 °C zu mindestens 35 Gew.-% und weniger als 100 Gew.-% in flüssiger Form vorliegt.

2. Mittel nach Anspruch 1, dadurch gekennzeichnet, daß es 80 Gew.-% bis 95 Gew.-%, insbesondere 82 Gew.-% bis 92 Gew.-% Trägermaterial (I) und 5 Gew.-% bis 20 Gew.-%, insbesondere 8 Gew.-% bis 18 Gew.-% Entschäumergemisch (II) enthält.

3. Mittel nach Anspruch 1 oder 2, dadurch gekennzeichnet, daß das Entschäumergemisch (II) 80 Gew.-% bis 95 Gew.-%, insbesondere 82 Gew.-% bis 90 Gew.-% Paraffinwachs (a) und 5 Gew.-% bis 20 Gew.-%, insbesondere 10 Gew.-% bis 18 Gew.-% Bisamid (b) enthält.

4. Mittel nach einem der Ansprüche 1 bis 3, dadurch gekennzeichnet, daß das Trägermaterial (I) bis zu 99 Gew.-%, insbesondere 60 Gew.-% bis 95 Gew.-% Alkalicarbonat und/oder Alkalisulfat, insbesondere Natriumcarbonat und/oder Natriumsulfat, bis zu 35 Gew.-%, insbesondere von 0,5 Gew.-% bis 30 Gew.-% Alkalisilikat, insbesondere Natriumsilikat und bis zu 5 Gew.-%, insbesondere 0,5 Gew.-% bis 2 Gew.-% filmbildendes wasserlösliches beziehungsweise in Wasser quellfähiges Polymer, insbesondere Celluloseether enthält.

5. Mittel nach einem der Ansprüche 1 bis 4, dadurch gekennzeichnet, daß das Trägermaterial organische Substanzen, insbesondere Acetate, Tartrate, Succinate, Citrate, Carboxymethylsuccinate, Alkalisalze von Aminopolycarbonsäuren, Hydroxyalkanphosphonate, Aminoalkanpolyphosphonate, wasserlösliche Salze von polymeren beziehungsweise copolymeren Carbonsäuren, Stärke, Stärkehydrolysate und/oder deren Gemische, enthält.

6. Mittel nach einem der Ansprüche 1 bis 5, dadurch gekennzeichnet, daß das Paraffinwachs (Bestandteil II a) bei 40 °C einen Flüssiganteil von mindestens 45 Gew.-%, insbesondere von 55 Gew.-% bis 80 Gew.-% und bei 60 °C einen Flüssiganteil von mindestens 90 Gew.-% aufweist.

7. Mittel nach einem der Ansprüche 1 bis 6, dadurch gekennzeichnet, daß das Paraffinwachs (Bestandteil II a) weniger als 1 Gew.-%, insbesondere weniger als 0,5 Gew.-% bei 110 °C und Normaldruck verdampfbare Anteile enthält.

8. Mittel nach einem der Ansprüche 1 bis 7, dadurch gekennzeichnet, daß das Bisamid (Bestandteil II b) ein Reaktionsprodukt von Ethylendiamin mit einer gesättigten C₁₄₋₁₈-Carbonsäure ist.

9. Mittel nach einem der Ansprüche 1 bis 8, dadurch gekennzeichnet, daß es frei von emulgierend beziehungsweise dispergierend wirkenden Tensiden ist.

10. Verfahren zur Herstellung eines körnigen Schaumregulierungsmittels gemäß einem der Ansprüche 1 bis 9, dadurch gekennzeichnet, daß man in einer wäßrigen Lösung oder Aufschlämmung des Trägermaterials (I), die 30 Gew.-% bis 60 Gew.-% Wasser enthält, das Entschäumergemisch (II), als ganzes oder in Form seiner getrennten Einzelkomponenten, gegebenenfalls unter Zusatz von in Wasser löslichem beziehungsweise quellfähigem Polymer, dispergiert und die Dispersion sprühtrocknet.

11. Verfahren nach Anspruch 10, dadurch gekennzeichnet, daß man sich überhitzten Wasserdampfes als Trocknungsgas bedient, das im Kreislauf geführt werden kann und außerhalb der Trocknungszone erhitzt wird

12. Verwendung eines körnigen Schaumregulierungsmittels gemäß einem der Ansprüche 1 bis 9 und/oder hergestellt nach dem Verfahren gemäß einem der Ansprüche 10 oder 11 zur Herstellung von teilchenförmigen Wasch- oder Reinigungsmitteln.

## Claims

1. A granular free-flowing foam regulator containing (I) granular water-soluble or water-dispersible inorganic and/or organic carrier material and (II) an adsorbed homogeneous defoamer mixture containing (a) 70% by weight to 95% by weight of a paraffin wax or paraffin wax mixture and (b) 5% by weight to 30% by weight of a bisamide derived from C₂₋₇ diamines and saturated C₁₂₋₂₂ carboxylic acids, characterized in that the paraffin wax (component IIa) is solid at room temperature and, at a temperature of 40°C, is at least 35% by weight and less than 100% by weight liquid.

2. A foam regulator as claimed in claim 1, characterized in that it contains 80% by weight to 95% by weight and more particularly 82% by weight to 92% by weight of carrier material (I) and 5% by weight to 20% by weight and more particularly 8% by weight to 18% by weight of defoamer mixture (II).

3. A foam regulator as claimed in claim 1 or 2, characterized in that the defoamer mixture (II) contains 80% by weight to 95% by weight and more particularly 82% by weight to 90% by weight of paraffin wax (a) and 5% by weight to 20% by weight and more particularly 10% by weight to 18% by weight of bisamide (b).

4. A foam regulator as claimed in any of claims 1 to 3, characterized in that the carrier material (I) contains up to 99% by weight and more particularly 60% by weight to 95% by weight of alkali metal carbonate and/or alkali metal sulfate, more particularly sodium carbonate and/or sodium sulfate, up to 35% by weight and more particularly 0.5% by weight to 30% by weight of alkali metal silicate, more particularly sodium silicate, and up to 5% by weight and more particularly 0.5% by weight to 2% by weight of film-forming water-soluble or water-swellable polymer, more particularly cellulose ether.

5. A foam regulator as claimed in any of claims 1 to 4, characterized in that the carrier material contains organic substances, more particularly acetates, tartrates, succinates, citrates, carboxymethyl succinates, alkali metal salts of aminopolycarboxylic acids, hydroxyalkane phosphonates, aminoalkane polyphosphonates, water-soluble salts of polymeric or copolymeric carboxylic acids, starch, starch hydrolyzates and/or mixtures thereof.

6. A foam regulator as claimed in any of claims 1 to 5, characterized in that the paraffin wax (component IIa) is at least 45% by weight and more particularly 55% by weight to 80% by weight liquid at 40°C and at least 90% by weight liquid at 60°C.

7. A foam regulator as claimed in any of claims 1 to 6, characterized in that less than 1% by weight and more particularly less than 0.5% by weight of the paraffin wax (component IIa) is volatile at 110°C/normal pressure.

8. A foam regulator as claimed in any of claims 1 to 7, characterized in that the bisamide (component llb) is a reaction product of ethylenediamine with a saturated C₁₄₋₁₈ carboxylic acid.

9. A foam regulator as claimed in any of claims 1 to 8, characterized in that it is free from surfactants with an emulsifying or dispersing effect.

10. A process for the production of the granular foam regulator claimed in any of claims 1 to 9, characterized in that the defoamer mixture (II) as a whole or in the form of its separate individual constituents is dispersed in an aqueous solution or suspension of the carrier material (I) containing 30% by weight to 60% by weight of water, optionally in the presence of added water-soluble or water-swellable polymer, and the dispersion is spray-dried.

11. A process as claimed in claim 10, characterized in that the drying gas used is superheated steam which may be circulated and is heated outside the drying zone.

12. The use of the granular foam regulator claimed in any of claims 1 to 9 and/or produced by the process claimed in claim 10 or 11 for the production of particulate detergents.

## Revendications

1. Agent de régulation de la mousse, en grains apte au ruissellement contenant un matériau de support I en grains, soluble dans l'eau ou dispersible dans l'eau, minéral et/ou organique, et (II) un mélange d'agents anti-mousse homogène, adsorbé, qui contient :
a) de 70 % en poids à 95 % en poids d'une cire de paraffine ou d'un mélange de cires de paraffine ainsi que
b) 5 % en poids à 30 % en poids d'un bisamide dérivé de diamines en C₂-C₇ et d'acides carboxyliques saturés en C₁₂-C₂₂,
caractérisé en ce que
la cire de paraffine (composant IIa) est solide à température ambiante et se présente à une température de 40°C pour au moins 35 % en poids et moins de 100 % en poids sous forme liquide.

2. Agent selon la revendication 1,
caractérisé en ce qu'
il contient de 80 % en poids à 95 % en poids, en particulier de 82 % en poids à 92 % en poids, de matériau de support (I) et de 5 % en poids à 20 % en poids, en particulier de 8 % en poids à 18 % en poids de mélange d'agents anti-mousse (II).

3. Agent selon la revendication 1 ou 2,
caractérisé en ce que
le mélange d'agents anti-mousse (II) contient de 80 % en poids à 95 % en poids, en particulier de 82 % en poids à 90 % en poids de cire de paraffine (a) et de 5 % en poids à 20 % en poids, en particulier de 10 % en poids à 18 % en poids de bisamide (b).

4. Agent selon l'une des revendications 1 à 3,
caractérisé en ce que
le matériau de support (I) contient jusqu'à 99 % en poids, en particulier de 60 % en poids à 95 % en poids de carbonate de métal alcalin et/ou de sulfate de métal alcalin, en particulier de carbonate de sodium et/ou de sulfate de sodium, jusqu'à 35 % en poids, en particulier de 0,5 % en poids à 30 % en poids de silicate de métal alcalin, en particulier du silicate de sodium, et jusqu'à 5 % en poids, en particulier de 0,5 % en poids à 2 % en poids de polymère filmogène soluble dans l'eau ou apte au gonflement dans l'eau, en particulier un éther de cellulose.

5. Agent selon l'une des revendications 1 à 4,
caractérisé en ce que
le matériau de support contient des substances organiques en particulier des acétates, des tartrates, des succinates, des citrates, des carboxyméthylsuccinates, des sels de métal alcalin d'acide aminopolycarboxyliques, des hydroxyalkanephosphonates, des aminoalkanepolyphosphonates, des sels solubles dans l'eau, des acides carboxyliques polymères ou copolymères, des amidons, des hydrolysats d'amidon et/ou leurs mélanges.

6. Agent selon l'une des revendications 1 à 5,
caractérisé en ce que,
la cire de paraffine (Constituant IIa) possède à 40°C une proportion de liquide d'au moins 45 % en poids en particulier de 55 % en poids à 80 % en poids et à 60°C une proportion de liquide d'au moins 90 % en poids.

7. Produit selon l'une des revendications 1 à 6,
caractérisé en ce que
la cire de paraffine (constituant IIa) contient moins de 1 % en poids, en particulier moins de 0,5 % en poids de fractions vaporisables à 110°C et à pression normale.

8. Agent selon l'une des revendications 1 à 7,
caractérisé en ce que
le bisamide (constituant IIb) est un produit de réaction entre l'éthylènediamine et un acide carboxylique saturé en C₁₄-C₁₈.

9. Agent selon l'une des revendications 1 à 8,
caractérisé en ce qu'
il est dépourvu d'agents tensioactifs à action émulsionnante ou dispersante.

10. Procédé de préparation d'un agent de régulation de la mousse, en grains, conformément à l'une des revendications 1 à 9,
caractérisé en ce qu'
on disperse dans une solution ou une suspension aqueuse du matériau de support (I) qui contient de 30 % en poids à 60 % en poids, d'eau, le mélange d'agents anti-mousse (II) dans sa totalité ou sous la forme de ses composants individuels séparés, le cas échéant en ajoutant un polymère soluble dans l'eau ou apte à gonfler dans l'eau, et on sèche par atomisation la dispersion.

11. Procédé selon la revendication 10,
caractérisé en ce qu'
on utilise de la vapeur d'eau surchauffée comme gaz de séchage qui peut être conduit en circuit et qui est chauffée en dehors de la zone de séchage.

12. Utilisation d'un agent de régulation de mousse, en grains, conformément à l'une des revendications 1 à 9, et/ou produit selon le procédé conforme à l'une des revendications 10 ou 11, pour la production de produits de lavage ou de nettoyage sous forme particulaire.
